# EUROPEAN PATENT SPECIFICATION

(11) **EP 4 139 073 B1**
(45) Date of publication and mention of the grant of the patent: **03.01.2024**
(21) Application number: 21735168.3
(22) Date of filing: 07.06.2021
(51) Int. Cl.: B22F 10/28, B33Y 10/00, B33Y 30/00, B33Y 50/02, B22F 10/362, B22F 12/90, B22F 12/17

(54) **PREHEATING A BUILD PLATE FOR ADDITIVE MANUFACTURING**
VORWÄRMUNG EINER AUFBAUPLATTE ZUR GENERATIVEN FERTIGUNG
PRÉCHAUFFAGE D'UNE PLAQUE DE CONSTRUCTION POUR UNE FABRICATION ADDITIVE

(30) Priority: 24.06.2020 EP 20181987
(43) Date of publication of application: 01.03.2023
(73) Proprietor: Siemens Aktiengesellschaft, 80333 München (DE)
(72) Inventor: DRENDEL, Jan, 13355 Berlin (DE); HEINRICHSDORFF, Frank, 14513 Teltow (DE); LOGVINOV, Ruslan, 95447 Bayreuth (DE)
(74) Representative: Siemens Patent Attorneys
(86) International application number: PCT/EP2021/065144
(87) International publication number: WO 2021/259621

(56) References cited:
- EP-A1- 3 202 558
- WO-A1-2019/049832

## Description

The invention concerns a method for preheating a build plate for additive manufacturing, especially in powder-bed additive manufacturing. The invention further concerns a method for manufacturing a product with a preheated build plate and an apparatus.

The method according to the invention can be applied in energy beam additive manufacturing, like selective laser sintering/melting processes (SLS and SLM), electron beam melting process (EBM) and similar additive manufacturing technologies.

For processing brittle alloys using powder bed based additive manufacturing technologies it may be necessary to preheat the build plate (also referred to as base plate) to temperatures in the magnitude of the processed alloys melting point. This can be achieved by repeatedly scanning the top surface of the base plate with a defocused beam, before the first layer of powder is deposited. The target temperature of the preheating process can be specified beforehand, but the beam power necessary to reach and maintain the target temperature is difficult to determine beforehand. It not only depends on the base plate material and beam efficiency but is very sensitive to the surface emissivity of the base plate and the environment (build chamber) which are subject to oxidation and metal evaporation. Additionally, the base plate is subject to heat conduction into the surrounding powder bed. Even though metal powders exhibit small heat conductivities, due to the elevated temperature level a significant temperature drop can be observed at the boundaries and edges of the base plate. This inhomogeneity is not desirable as parts that are built in the edge region of the base plate see a different preheat temperature compared to parts built in the plates center.

WO 2019/049832 discloses a method for preheating a build plate for additive manufacturing with at least one energy beam emitting a power, wherein the method comprises controlling a scanning speed of the beam over dimensions (X, Y).

The problem to be solved by the invention is to improve preheating of build plates in energy beam additive manufacturing.

To solve this problem a method for preheating a build plate for additive manufacturing according to the appended claims is proposed.

The target temperature is the set value for the temperature the build plate has after the preheating process. The allocation of power to the dimensions of the build plate results in a temperature distribution in the build plate. The temperature distribution is a measure of how uniformly the temperature is distributed over the build plate. Additive manufacturing of an object is usually performed layer by layer in a powder bed, wherein the object is built on the preheated build plate by selectively melting and/or sintering the powder bed. The invention enables automatic and fast preheating of the base plate without the need of user interaction. Furthermore, it enables homogenous preheat temperatures which result in better control of the microstructure of parts build in the boundary regions of the plate. Depending on the material, it may enable building parts in the boundary region of the base plate in the first place and thus increases overall productivity of the high temperature AM process.

The center temperature and the edge temperature can be measured by one or more thermocouples per area. The edge temperature can be determined for one edge, when the edges are heated comparably. It is also possible to determine multiple temperatures to measure the temperature distribution more accurately.

The temperature distribution is a difference between the center temperature and the edge temperature. The difference provides a measure for the remaining temperature differences within the build plate and is efficient to calculate and process. It has proven to be advantageous to use a temperature difference between the edge temperature and the center temperature, since it is a sufficiently exact control variable to achieve an acceptable homogenous temperature distribution within the build plate.

In a further embodiment of the method, the beam power is limited such that a melting temperature of the base plate is not exceeded locally. This can be achieved by applying a build plate and/or material and/or temperature dependent maximum value of power per area. In a further embodiment of the method, the beam power is limited such that a melting temperature of the base plate is not exceeded locally by applying a limiting function to control the power distribution and/or the beam power. As a first measure to avoid damage to the base plate the melting temperature of the base plate cannot be exceeded as a set value for temperature for the controller input. Nevertheless, depending on the controller dynamics, the melting temperature can be exceeded locally due to an excess of power applied on one location in a defined span of time. Due to negative impact on the build plate this should be avoided. To prevent locally exceeding the melting temperature of the build plate a limiting function can be implemented. It has been shown that the limiting function best can be implemented in addition to a limit of the set value. The limiting function can directly be implemented with the control function of the power distribution.

To avoid local melting, the beam power can be limited by a limiting function in the form f_{LIM} = min(P, Pₗᵢₘᵢₜ), where Pₗᵢₘᵢₜ is the maximum allowed beam power without locally melting the surface of the base plate and may be a function of the base plate temperature, beam diameter and scan speed.

According to the invention a first controller is configured to control the power and a second controller is configured to control the power distribution. This separation of power-control and distribution-control allows for a strict control design each based on the individual needs of the power and the power distribution. The first controller can be part of a first control loop to enable the automatic raise of temperature and accordingly the second controller as a second control loop enabling a homogenous temperature distribution. In a further embodiment of the method the first controller is separate from the second controller. This can be realized in software or by providing to actual control hardware products.

According to the invention, controlling the power distribution is based on a target temperature difference as a set value for the temperature distribution. It is possible to provide a set value for the difference - ideally the build plate has an even temperature distribution with the same temperature in the center as at the edges. As a setpoint the target temperature difference can be chosen to have negative values (temperature in center is larger than on the edge), to be zero (center and edge temperature equal) and positive values (temperature in edge is larger than in center). Depending on the beam source, different options for power distribution on the build plate are available. If the beam power dynamics is comparable to the deflection dynamics as e.g. in laser-based powderbed additive manufacturing, the beam power can be tuned depending on its position on the plate.

In contrast, if the power dynamics is much lower than the deflection dynamics a different approach for reaching a nonuniform heat deposition is adjusting the heat strategy. By locally increasing the hatch-distance or reducing the scan velocity an increase of area specific heat input can be realized, while keeping the beam power constant. Thus, output of the inner controller for power can be a scale factor (e.g. range: 0 to 1) for a predefined heating strategy, that distributes the beam power. For a scale factor of zero the beam power would be homogenously distributed. A scale factor of one would result in a heating strategy with zero heat input in the center of the plate and an increasing heat input towards the boundary. The exact heat distribution function may depend on base plate geometry and material properties and can be determined beforehand using simulations or empirical values.

In another embodiment of the invention, determining the power for the beam is based on a difference between a target temperature for the base plate and the center temperature. Alternatively, an average temperature of center temperature and edge temperature could be used. In a closed loop system, this difference between a target temperature for the base plate and the center temperature serves as a control difference as input for a closed loop controller. This is shown in FIG as an example.

The problem further is solved by a method for manufacturing an object layer by layer in a powder bed, wherein the object is built on a build plate preheated by a method according to one of the preceding embodiments.

In a further embodiment the method comprises determining a target temperature for the base plate based on a material to be processed. The step of determining can comprise looking up ideal temperatures for the build plate according to the material which is to be processed by the factoring method. Especially for highly brittle materials a careful selection of the base plate temperature for the used material is advantageous. It is possible to provide a lookup table for target temperatures for different materials, so that the target temperature can be selected automatically by the selection of a material.

The problem further is solved by an additive manufacturing apparatus, comprising at least an energy beam source, a powder bed with a build plate and a control unit designed and/or programmed to perform a method for preheating the build plate.

In a further embodiment the additive manufacturing apparatus comprises an edge thermal sensor for determining an edge temperature and a center thermal sensor for determining center temperature. The thermal sensors can be thermocouples that are attached to the respective locations. The advantage of thermocouples is, that they are reliable and widely available. A variation of heating power and power distribution could also rely on spatially resolved temperature measurements (thermography).

In a further embodiment the additive manufacturing apparatus comprises a temperature measurement system delivering a center temperature and an edge temperature. This system can be based on thermal imaging or other contactless principles.

An alternative approach for setting beam power and distribution could also be based on thermal simulations of the base plate and different power settings and materials. Combinations of two or more of those are also possible and may improve the thermal homogeneity of the method by having a more detailed view of the thermal distribution. The advantage of the current invention is that a manual adjustment of preheating power and thus the corresponding operator-dependence of the process parameters can be avoided.

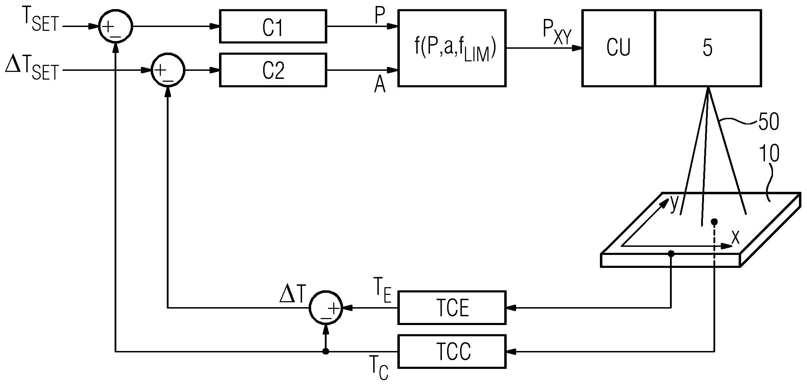

In the following FIG the invention is described and explained in more detail by means of the design examples shown in the figure.

FIG shows a schematic for an exemplary control circuit to realize an embodiment of the invention. A build plate 10 also known as a base plate is shown having dimensions X and Y. A center thermo couple TCC provides a center temperature T_{C} of the center of the build plate 10 as well as an edge thermo couple TCE providing an edge temperature T_{E} edge of the build plate 10. It is noted, that the edge temperature T_{E} could also be measured in one of the corners of the build plate 10. The build plate 10 is subject to an energy beam 50 to preheat the build plate 10 and later to build an object layer by layer.

A first controller C1 is provided with a set value for the target temperature T_{SET} from which the center temperature T_{C} is subtracted. This difference generates the input for the first controller C1. A temperature distribution ΔT is provided based on a difference between center temperature T_{C} and edge temperature T_{E} to a second controller C2. In this case a target temperature difference ΔT_{SET} is also provided to generate a control difference between the target temperature difference ΔT_{SET} and the current temperature distribution ΔT as an input for the second controller C2.

As an output, the first controller C1 creates a power P needed to achieve a temperature T_{SET}. This power P could be directly fed into a control unit CU for an energy beam source 5. This would lead to a local temperature according to the set value in the center, but not a homogeneous temperature distribution. Therefore, the second controller C2 outputs a scale factor A, indicating how the power P should be distributed over the dimensions X and Y of the build plate 10. It is possible to feed the control unit CU directly with the power P and the scale factor A to achieve a homogeneous temperature distribution. To further improve the preheating the power P and the scale factor A are subject to a further distribution function f(P,A,f_{LIM}) comprising a limiting function f_{LIM}. The distribution function f(P,A,f_{LIM}) is used to calculate the power distribution (P_{XY}) which can be realized as a location information in X-Y coordinates and a power to be introduced into the respective location by the beam 50. To prevent local melting of the build plate 10 due to excess power P a limiting function f_{LIM} is applied to the power P to generate the output power distribution P_{XY}. As an input to the beam control unit the output power distribution P_{XY} delivers all necessary information to control an additive manufacturing apparatus to achieve a preheated build plate 10.

In summary the invention concerns a method for preheating a build plate 10 for additive manufacturing with at least one energy beam 50 emitting a power P, wherein the method comprises controlling a power distribution P_{XY} of the power P over dimensions X, Y of the build plate 10 comprising:
- determining the power P of the beam 50 based on a target temperature T_{SET} for the base plate 10 and
- determining the allocation of the power P to the dimensions X, Y based on a temperature distribution ΔT in the base plate 10. The invention further concerns a method for manufacturing an object and an additive manufacturing apparatus.

### Reference signs

- CU: beam control unit
- C1: first controller
- C2: second controller
- 5: energy beam source
- 10: build plate
- X: X-dimension of the build plate
- Y: Y-dimension of the build plate
- 50: energy beam
- TCE: thermo couple edge
- TCC: thermo couple center

- P: power
- A: scale factor
- P_{XY}: power distribution

- f(P,A, f_{LIM}): distribution function
- f_{LIM}: limiting function

## Claims

1. Method for preheating a build plate (10) for additive manufacturing with at least one energy beam (50) emitting a power (P), wherein the method comprises controlling a power distribution (P_{XY}) of the power (P) over dimensions (X, Y) of the build plate (10) comprising:
- determining a center temperature (T_{C}) indicative of a temperature in a center area of the base plate (10),
- determining an edge temperature (T_{E}) indicative of a temperature in an edge region of the base plate (10),
- determining the power (P) of the beam (50) based on a target temperature (T_{SET}) for the base plate (10) and controlling the power (P) by a first controller (C1),
- determining a temperature distribution (ΔT) based on a difference between the center temperature (T_{C}) and the edge temperature (T_{E}) and
- determining the allocation of the power (P) to the dimensions (X, Y) based on the temperature distribution (ΔT) in the base plate (10),
wherein the power distribution (P_{XY}) is controlled by a second controller (C2) based on a target temperature difference (ΔT_{SET}) as a set value for the temperature distribution (ΔT), wherein the target temperature difference (ΔT_{SET}) is provided to generate a control difference between the target temperature difference (ΔT_{SET}) and the current temperature distribution (ΔT) as an input for the second controller (C2).

2. Method according to claim 1, comprising the step of limiting the beam power (P) such that a melting temperature of the base plate (10) is not exceeded locally.

3. Method according to one of the preceding claims, comprising limiting the beam power (P) such that a melting temperature of the base plate (10) is not exceeded locally by applying a limiting function (f_{LIM}) to control the power distribution (P_{XY}) and/or the beam power (P).

4. Method according to claim 3, wherein the first controller (C1) is separate from the second controller (C2).

5. Method according to one of the preceding claims, wherein determining the power (P) is based on a difference between a target temperature (T_{SET}) and the center temperature (T_{C}).

6. Method according to one of the preceding claims, comprising manufacturing an object layer by layer in a powder bed on the preheated build plate (10).

7. Method according to one of the preceding claims, comprising determining a target temperature (T_{SET}) for the base plate (10) based on a material to be processed.

8. Additive manufacturing apparatus, comprising at least an energy beam source (5), a powder bed with a build plate (10) and a control unit (CU) programmed to perform the method for preheating the build plate (10) according one of the claims 1-5.

9. Additive manufacturing apparatus according to claim 8, comprising an edge thermal sensor (TCE) for determining an edge temperature (T_{E}) and a center thermal sensor (TCC) for determining center temperature (T_{C}).

10. Additive manufacturing apparatus according to claim 9, comprising a temperature measurement system delivering a center temperature (T_{C}) and an edge temperature (T_{E}).

## Patentansprüche

1. Verfahren zum Vorwärmen einer Aufbauplatte (10) für additive Fertigung mit mindestens einem Energiestrahl (50), der eine Leistung (P) emittiert, wobei das Verfahren Steuern einer Leistungsverteilung (P_{XY}) der Leistung (P) über Dimensionen (X, Y) der Aufbauplatte (10) umfasst, umfassend:
- Bestimmen einer Mittelpunkttemperatur (T_{C}), die eine Temperatur eines mittleren Bereichs der Basisplatte (10) angibt,
- Bestimmen einer Randtemperatur (T_{E}), die eine Temperatur eines Randbereichs der Basisplatte (10) angibt,
- Bestimmen der Leistung (P) des Strahls (50) basierend auf einer Soll-Temperatur (T_{SET}) für die Basisplatte (10) und Steuern der Leistung (P) durch eine erste Steuerung (C1),
- Bestimmen einer Temperaturverteilung (ΔT) basierend auf einer Differenz zwischen der Mittelpunkttemperatur (T_{C}) und der Randtemperatur (T_{E}) und
- Bestimmen der Zuordnung der Leistung (P) zu den Dimensionen (X, Y) basierend auf der Temperaturverteilung (ΔT) in der Basisplatte (10),
wobei die Leistungsverteilung (P_{XY}) durch eine zweite Steuerung (C2) basierend auf einer Soll-Temperaturdifferenz (ΔT_{SET}) als Sollwert für die Temperaturverteilung (ΔT) gesteuert wird, wobei die Soll-Temperaturdifferenz (ΔT_{SET}) bereitgestellt wird, um eine Steuerdifferenz zwischen der Soll-Temperaturdifferenz (ΔT_{SET}) und der Ist-Temperaturverteilung (ΔT) als Eingabe für die zweite Steuerung (C2) zu erzeugen.

2. Verfahren nach Anspruch 1, umfassend den Schritt zum Begrenzen der Strahlleistung (P), sodass eine Schmelztemperatur der Basisplatte (10) lokal nicht überschritten wird.

3. Verfahren nach einem der vorhergehenden Ansprüche, umfassend Begrenzen der Strahlleistung (P), sodass eine Schmelztemperatur der Basisplatte (10) lokal nicht überschritten wird, durch Anwenden einer Begrenzungsfunktion (f_{LIM}), um die Leistungsverteilung (P_{XY}) und/oder die Strahlleistung (P) zu steuern.

4. Verfahren nach Anspruch 3, wobei die erste Steuerung (C1) von der zweiten Steuerung (C2) getrennt ist.

5. Verfahren nach einem der vorhergehenden Ansprüche, wobei das Bestimmen der Leistung (P) auf einer Differenz zwischen einer Soll-Temperatur (T_{SET}) und der Mittelpunkttemperatur (T_{C}) basiert.

6. Verfahren nach einem der vorhergehenden Ansprüche, umfassend Fertigen des Objekts Schicht für Schicht in einem Pulverbett auf der vorgewärmten Aufbauplatte (10).

7. Verfahren nach einem der vorhergehenden Ansprüche, umfassend Bestimmen einer Soll-Temperatur (T_{SET}) für die Basisplatte (10) basierend auf einem zu verarbeitenden Material.

8. Einrichtung für additive Fertigung, umfassend mindestens eine Energiestrahlquelle (5), ein Pulverbett mit einer Aufbauplatte (10) und eine Steuereinheit (CU), programmiert zum Durchführen des Verfahrens zum Vorwärmen der Aufbauplatte (10) nach einem der Ansprüche 1-5.

9. Einrichtung für additive Fertigung nach Anspruch 8, umfassend einen Randwärmesensor (TCE) zum Bestimmen einer Randtemperatur (T_{E}) und einen Mittelpunktwärmesensor (TCC) zum Bestimmen einer Mittelpunkttemperatur (T_{C}).

10. Einrichtung für additive Fertigung nach Anspruch 9, umfassend ein Temperaturmesssystem, das eine Mittelpunkttemperatur (T_{C}) und eine Randtemperatur (T_{E}) liefert.

## Revendications

1. Procédé de préchauffage d'une plaque (10) de construction pour une fabrication additive par au moins un faisceau (50) d'énergie émettant une puissance (P), dans lequel le procédé comprend commander une répartition (P_{XY}) de la puissance (P) en fonction des dimensions (X, Y) de la plaque (10) de construction comprenant :
- déterminer une température (T_{C}) au centre indiquant une température dans une zone du centre de la plaque (10) de base,
- déterminer une température (T_{E}) au bord indiquant une température dans une région du bord de la plaque (10) de base,
- déterminer la puissance (P) du faisceau (50) sur la base d'une température (T_{SET}) cible de la plaque (10) de base et commander la puissance (P) par une première unité (C1) de commande,
- déterminer une répartition (ΔT) de température sur la base d'un différence entre la température (T_{C}) au centre et la température (T_{E}) au bord et
- déterminer l'allocation de la puissance (P) aux dimensions (X, Y) sur la base de la répartition (ΔT) de température dans la plaque (10) de base,
dans lequel on commande la répartition (P_{XY}) de puissance par une deuxième unité (C2) de commande sur la base d'une différence (ΔT_{SET}) de température cible, comme valeur de réglage de la répartition (ΔT) de température, dans lequel la différence (ΔT_{SET}) de température cible est donnée pour créer une différence de commande entre la différence (ΔT_{SET}) de température cible et la répartition (ΔT) de température courante comme entrée pour la deuxième unité (C2) de commande.

2. Procédé suivant la revendication 1, comprenant le stade de limitation de puissance (P) du faisceau, de manière à ce qu'un point de fusion de la plaque (10) de base ne soit pas dépassé localement.

3. Procédé suivant l'une des revendications précédentes, comprenant limiter la puissance (P) du faisceau, de manière à ce qu'un point de fusion de la plaque (10) de base ne soit pas dépassé localement, en appliquant une fonction (f_{LIM}) de limitation pour commander la répartition (P_{XY}) de puissance et/ou la puissance (P) du faisceau.

4. Procédé suivant la revendication 3, dans lequel la première unité (C1) de commande est distincte de la deuxième unité (C2) de commande.

5. Procédé suivant l'une des revendications précédentes, dans lequel déterminer la puissance (P) repose sur une différence entre une température (T_{SET}) cible et la température (T_{C}) au centre.

6. Procédé suivant l'une des revendications précédentes, comprenant fabriquer un objet couche par couche dans un lit de poudre sur la plaque (10) de construction préchauffée.

7. Procédé suivant l'une des revendications précédentes, comprenant déterminer une température (T_{SET}) cible de la plaque (10) de base sur la base d'un matériau à traiter.

8. Installation de fabrication additive, comprenant au moins une source (5) à faisceau d'énergie, un lit de poudre avec une plaque (10) de construction et une unité (CU) de commande programmée pour effectuer le procédé de préchauffage de la plaque (10) de construction suivant l'une des revendications 1 à 5.

9. Installation de fabrication additive suivant la revendication 8, comprenant un capteur (TCE) thermique de bord pour déterminer une température (T_{E}) au bord et un capteur (TCC) thermique de centre pour déterminer une température (T_{C}) au centre.

10. Installation de fabrication additive suivant la revendication 9, comprenant un système de mesure de la température donnant une température (T_{C}) au centre et une température (T_{E}) au bord.
